(19) **Europäisches Patentamt / European Patent Office / Office européen des brevets**

(11) **EP 3 417 191 B1**

(12) **FASCICULE DE BREVET EUROPEEN**

(45) Date de publication et mention de la délivrance du brevet:
**26.05.2021 Bulletin 2021/21**

(21) Numéro de dépôt: **17702907.1**

(22) Date de dépôt: **04.01.2017**

(51) Int Cl.:
*F16H 61/28* (2006.01)    *F16H 63/50* (2006.01)

(86) Numéro de dépôt international:
**PCT/FR2017/050008**

(87) Numéro de publication internationale:
**WO 2017/140961 (24.08.2017 Gazette 2017/34)**

(54) **PROCEDE DE CONTROLE DU DECRABOTAGE D'UN BALADEUR**

VERFAHREN ZUR STEUERUNG DER ENTKOPPLUNG EINER SCHIEBEKUPPLUNG

METHOD OF CONTROLLING THE DECLUTCHING OF A SLIDING GEAR CLUTCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2016 FR 1651357**

(43) Date de publication de la demande:
**26.12.2018 Bulletin 2018/52**

(73) Titulaires:
• **Renault S.A.S.**
  **92100 Boulogne-Billancourt (FR)**
• **NISSAN MOTOR CO., LTD.**
  **Yokohama-shi,**
  **Kanagawa 221-0023 (JP)**

(72) Inventeurs:
• **MERIENNE, Ludovic**
  **91190 Gif Sur Yvette (FR)**
• **KVIESKA, Pedro**
  **78000 Versailles (FR)**

(74) Mandataire: **Rougemont, Bernard**
  **Renault s.a.s**
  **TCR GRA 2 36 - Sce 00267**
  **1, Avenue du Golf**
  **78084 Guyancourt Cedex (FR)**

(56) Documents cités:
**EP-A2- 1 522 764    FR-A1- 2 914 259**
**FR-A1- 2 921 525    FR-A1- 3 019 613**

**Description**

La présente invention concerne les groupes motopropulseurs (GMP) hybrides, disposant d'une boîte de vitesses à crabots, ou clabots, dépourvue de systèmes de synchronisation mécanique intégrés et d'embrayage d'entrée, permettant d'établir différents rapports de transmission entre au moins deux sources d'énergie, thermique et électrique d'un véhicule et ses roues motrices, sans possibilité d'interrompre le couple entre le moteur thermique et la boîte de vitesses pendant les passages de vitesses.

Plus précisément, elle a pour objet un procédé de contrôle du dé-crabotage d'un baladeur de boîte de vitesses de véhicule à crabots, solidaire en rotation d'un arbre de cette boîte sur lequel il peut se déplacer axialement sous la commande d'un actionneur de passage motorisé, entre une position neutre dé-crabotée, et au moins une position d'engagement sur un rapport hybride où il est craboté sur un pignon rendu solidaire de l'arbre pour transmettre aux roues du véhicule le couple reçu d'au moins deux sources motrices distinctes, de manière cumulative ou non Un tel procédé de contrôle est connu de FR 2 921 525 A1.

Cette invention a également pour objet un groupe motopropulseur hybride comprenant une boîte de vitesses à rapports étagés, reliés sur une ligne primaire dépourvue d'embrayage de coupure, à un moteur thermique et à au moins une machine électrique qui peuvent transmettre simultanément, ou non, leurs couples aux roues d'un véhicule sur au moins un rapport hybride dont l'engagement et le désengagement est assuré respectivement par le crabotage et par le dé-crabotage d'un baladeur à crabots, ou à clabots, sur un pignon.

Lorsqu'un GMP hybride comporte une boîte de vitesses avec des baladeurs à clabots ou à crabots sans systèmes de synchronisation intégrés, dépourvue d'embrayage d'entrée qui permettrait d'interrompre la transmission du couple entre le moteur thermique et les roues pendant les changements de vitesses, la synchronisation d'un pignon sur son arbre, préalable à l'engagement des crabots (ou clabots) du baladeur, dans ceux du pignon, s'effectue habituellement en pilotant les moteurs thermique et/ou électriques.

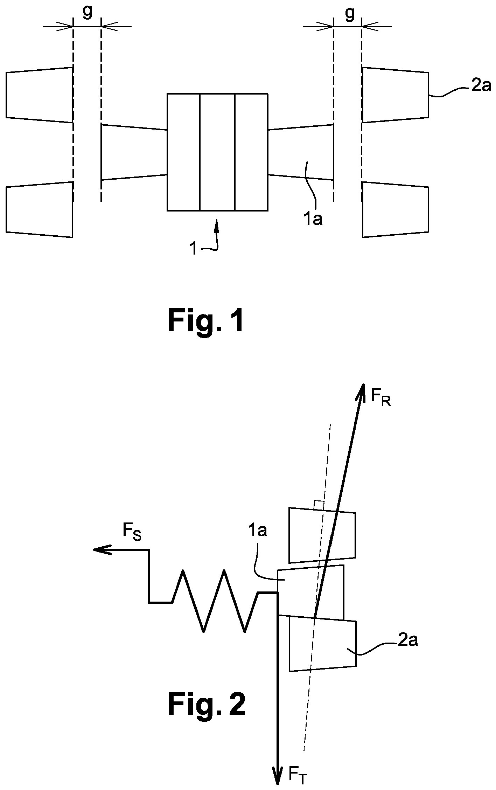

Pour assurer le maintien d'un rapport engagé, on peut adopter des dents, de forme particulière en trapèze, appelés « clabots » comme celles des figures 1 et 2. Sur la figure 1, le baladeur est au neutre, à égale distance g de deux pignons (non représentés). Les clabots la du baladeur 1 et les clabots 2a du pignon (non représentés) sont taillés en trapèze pour que la transmission du couple en rapport engagé maintienne, et même amplifie, leur enfoncement mutuel dans la position de rapport engagé. C'est leur fonction d'« *anti-lâcher* ». L'inclinaison des clabots génère une force de réaction $F_R$ inclinée par rapport à la force de traction $F_T$ imposée aux clabots par le couple de l'arbre moteur. La force réaction $F_r$ s'oppose à toute force $F_s$ de sortie des clabots du baladeur.

Dans ces conditions, il faut annuler le couple transmis par l'arbre, pour pouvoir désengager le baladeur. Lorsque la boîte de vitesses dispose d'un embrayage d'entrée (de coupure), ce problème est résolu simplement, en ouvrant l'embraye pendant l'opération. Sans embrayage de coupure, il faut un actionneur de désengagement suffisamment puissant pour vaincre la force de friction générée par l'anti-lâcher.

Toutes les sources d'énergie motrice d'un GMP, par exemple un moteur thermique et une ou deux machines électriques, peuvent générer du couple résiduel sur les rapports hybrides. On s'efforce d'annuler le couple résiduel sur l'arbre lors du dé-crabotage, en les pilotant de manière appropriée. La solution idéale, pour désengager à coup sûr le baladeur, est d'obtenir l'annulation du couple demandée aux trois moteurs. Les moteurs électriques offrent un bon temps de réponse. Ils peuvent annuler leur couple en moins de 100ms. En revanche, le moteur thermique peut avoir un temps de réponse supérieur à 500ms sur certains points de fonctionnement, en particulier à bas régime. L'annulation du couple au baladeur peut prendre un temps supérieur à la seconde. Ce délai est inacceptable pour l'agrément de conduite, car le temps d'annulation du couple fait partie intégrante du temps de changement de rapport.

Une première approche pour annuler immédiatement le couple du moteur thermique consiste à utiliser l'estimation de son couple, émise par le calculateur moteur sur le réseau de communication du véhicule, et à s'efforcer d'absorber ce couple pendant sa phase transitoire d'annulation. Le succès de cette méthode suppose que les autres moteurs (machines électriques) ont la capacité d'absorber ce couple transitoire. Dans le meilleur des cas, il faut qu'ils absorbent exactement l'inverse du couple fourni par le moteur thermique. Dans la pratique, on parvient à réduire le couple du baladeur, mais l'estimation du couple du moteur thermique n'est pas assez précise, pour que sa compensation par les autres moteurs permette de décraboter dans tous les cas.

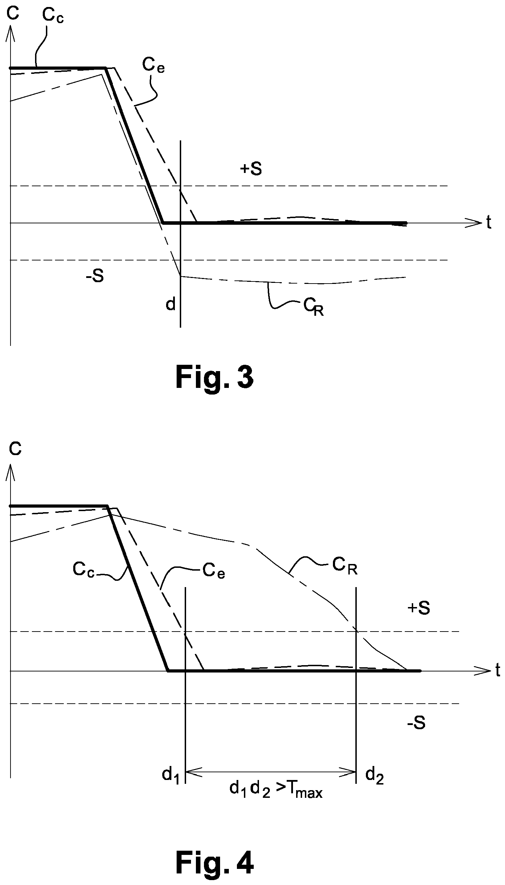

La figure 3 illustre une séquence d'échec de décrabotage par compensation du couple thermique avec les machines électriques. Cet échec résulte d'une erreur statique sur le couple estimé Ce du moteur thermique. Si le couple estimé en coupure d'injection est de 0 Nm le couple réel du moteur $C_R$ *est* négatif. Le couple de consigne $C_c$ de la machine électrique est nul. Le décrabotage est mis en échec à cause des anti-lâchers, si on demande un couple nul à la machine électrique à l'instant d. En effet, le couple réel $C_R$ au baladeur, reste supérieur (en valeur absolue) au seuil $S$ de dé-crabotage.

La durée d'activation des actionneurs de passage limite également les chances de succès de l'opération, ces actionneurs ne pouvant pas être sollicités trop longtemps, car ils chauffent. Lorsque l'effort résiduel sur les clabots du baladeur est encore important lors de la coupure de l'actionneur, le dé-crabotage est mis en échec. Dans le cas habituel où l'actionneur agit sur le baladeur par l'intermédiaire d'une fourchette de commande, il se peut que celle-ci n'ait pas encore assez bougé pour désengager le rapport.

La mauvaise estimation de la dynamique de couple du moteur thermique peut aussi être en elle-même une cause d'échec. Un cas fréquent, illustré par la figure 4, est que le couple estimé Ce converge rapidement vers sa cible nulle, alors que le couple réel $C_R$, fourni par le moteur, diminue plus lentement, car il lui faut généralement plus d'une seconde pour s'annuler. Le couple de consigne $C_c$ de la machine électrique est annulé trop tôt. La tentative de dé-crabotage est prématurée, car le couple réel $C_r$ du moteur thermique est encore trop élevé. Sur la figure 4, la demande de dé-crabotage est impossible à réaliser, si la durée (de *d1* à d2) pendant laquelle il est resté hors du seuil de dé-crabotage *S*, est trop longue car elle est supérieure au temps maximum d'activation $T_{max}$ de l'actionneur.

La présente invention propose d'assurer le dé-crabotage du baladeur, grâce à une nouvelle méthode reposant sur une juste estimation du couple résiduel au baladeur, insensible aux imprécisions des estimations de couple du moteur thermique.

La méthode proposée comporte les étapes suivantes :

- application d'une demande de couple nul sur toutes les sources motrices du véhicule,
- application d'une consigne de dé-crabotage sur le baladeur,
- en l'absence de dé-crabotage rapide, estimation du couple résistant sur les crabots du baladeur,
- calcul du couple résiduel sur les crabots en fonction du couple résistant calculé et de leur angle d'anti-lâcher,
- annulation du couple résiduel par application d'un couple opposé sur le baladeur,
- dé-crabotage.

La méthode est particulièrement sûre, et respecte les contraintes thermiques du module d'actionnement de changement de rapports.

La présente invention sera mieux comprise à la lecture de la description suivante d'un mode de réalisation non limitatif de celle-ci, en se reportant aux dessins annexés, sur lesquels :

- la figure 1 est une représentation schématique d'un baladeur au neutre entre deux pignons,
- la figure 2 indique les forces en présence lors du désengagement,
- les figures 3 et 4 illustrent deux cas d'impossibilité de réaliser un dé-crabotage sur un GMP hybride sans systèmes de synchronisation intégrés, ni embrayage d'entrée,
- la figure 5 est un observateur du couple résistant au crabot,
- la figure 6 illustre une cartographie de couple résistant en fonction du couple résiduel, et
- la figure 7 est un diagramme de la stratégie mise en œuvre.

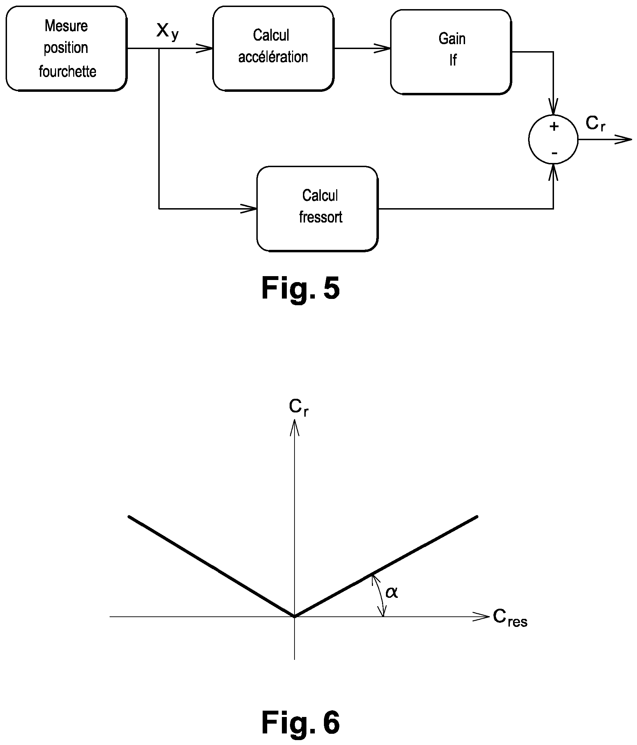

Une première partie de la méthode consiste à estimer le couple résiduel au crabot $C_{res}$. L'estimation proprement dite porte sur le couple résistant $C_r$ au crabot. L'effort résistant $C_r$ peut être estimé par un observateur tel que celui de la figure 5, en utilisant les données suivantes :

* $X_f$ : mesure de la position d'une fourchette d'actionnement (non représentée) du baladeur,
* $F_{ressort}$ : effort fourni par un ressort d'assistance,
* $K_{ressort}$ : coefficient de couple d'un ressort d'assistance,
et
* $I_f$ : inertie fourchette.

L'inertie $I_f$ est fonction de l'écart entre la position d'un organe de commande du baladeur, telle qu'une fourchette de passage, et celle d'un doigt d'actionnement de celle-ci. L'effort fourni par le ressort d'assistance ne dépend que de la position fourchette. L'équation qui régit le déplacement de la fourchette est la suivante :

$$I_f \frac{d^2}{dt^2} X_f = F_{ressort} + C_r = K_{ressort} X_f + C_r$$

Elle permet de calculer le gain sur l'inertie de la fourchette, qui est comparé à l'effort du ressort pour obtenir l'effort résistant. Le couple résistant $C_r$ est obtenu en soustrayant l'effort du ressort $F_{ressort}$ du gain sur l'inertie de la fourchette $I_f$, calculé en fonction de son accélération. On dispose ainsi d'une estimation du couple résistant aux clabots (ou crabots). Le couple résiduel dépend aussi de leur angle d'anti-lâcher. Pour un angle d'anti-lâcher α donné, on peut cartographier le couple résistant aux crabots en fonction du couple résiduel $C_{res}$, comme sur la figure 6, avec deux droites de conversion du même couple résistant $C_r$ en deux valeurs opposées de couple résiduel au crabot $C_{res}$, selon l'angle d'anti-lâcher $\alpha$. La réalisation d'une de ses valeurs sur les crabots du baladeur, annule le couple résiduel $C_{res}$, alors que l'autre le double.

La solution adoptée est de demander au moteur électrique d'appliquer un couple choisi au hasard parmi les deux valeurs de couple résiduel $C_{res}$ calculées. Si la valeur appliquée annule effectivement le couple du moteur thermique, la fourchette se rapproche de la position neutre, et le dé-crabotage est opéré. Si on observe que la fourchette s'éloigne de sa position neutre, le couple de la machine électrique a augmenté le couple résiduel. On peut alors basculer sur la seconde valeur, qui annule forcément le couple résiduel. Le dé-crabotage s'opère.

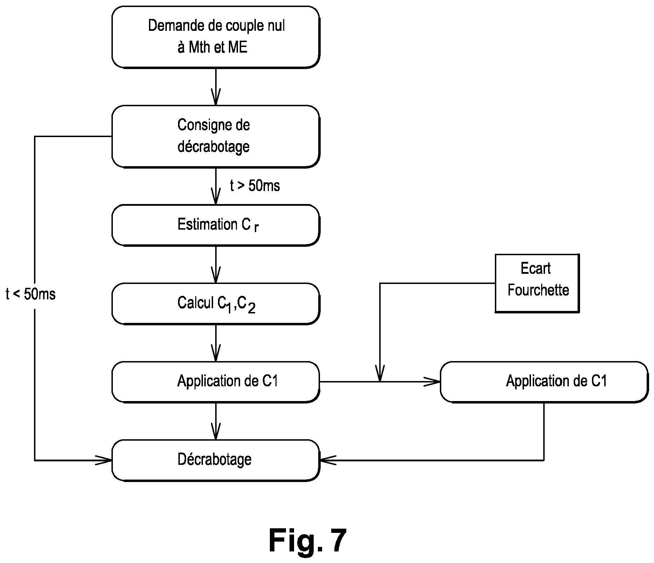

La stratégie est résumée sur la figure 7 (dans le cas non limitatif, d'un GMP comprenant un moteur thermique et une seule machine électrique). De manière plus générale, elle s'applique au contrôle du dé-crabotage d'un baladeur de toute boîte de vitesses de véhicule à crabots, solidaire en rotation d'un arbre de cette boîte sur lequel il peut se déplacer axialement sous la commande d'un actionneur de passage motorisé entre une position neutre dé-crabotée et au moins une position d'engagement sur un rapport hybride où il est craboté sur un pignon rendu solidaire de l'arbre pour transmettre aux roues du véhicule, le couple reçu, de manière cumulative ou non, d'au moins deux sources motrices distinctes.

Lorsqu'un changement de rapport impliquant un décrabotage de baladeur est commandé à la boîte de vitesses, une demande de couple nul est imposée au moteur thermique (Mth) et à la machine électrique (ME). Quand leurs couples sont estimés suffisamment faibles, pour autoriser le décrabotage, la consigne de décrabotage est envoyée à l'actionneur de passage concerné. Si à l'expiration d'un délai déterminé, par exemple de 50 ms, le décrabotage n'a pas eu lieu, on considère qu'un couple résiduel trop important subsiste au crabot. On estime alors le couple résistant $C_r$, d'où l'on peut déduire les deux valeurs de couple d'annulation $C1$ et $C2$, du couple résiduel $C_{res}$. La première est appliquée par exemple pendant 50ms, en vérifiant l'évolution de la position fourchette. On observe le sens de déplacement d'une fourchette d'actionnement du baladeur lors de l'application d'une première valeur $C1$ de couple d'annulation. Si la fourchette s'écarte de sa position neutre après l'application de la première valeur $C1$, on bascule sur la deuxième valeur $C2$, pendant la même durée que la première, pour assurer le dé-crabotage. Les deux valeurs de couple d'annulation opposées $C1$, $C2$, sont appliquées successivement sur le baladeur en cas d'échec de l'une d'elles. Avec les temps indiqués, le dé-crabotage est assuré dans tous les cas en moins de 150 ms.

En résumé, la méthode comporte au moins les étapes suivantes :

- application d'une demande de couple nul sur toutes les sources motrices du véhicule,
- application d'une consigne de dé-crabotage sur le baladeur,
- estimation du couple résistant $C_r$ sur les crabots du baladeur en l'absence de dé-crabotage rapide (t>50ms),
- calcul du couple résiduel $C_{res}$ sur les crabots en fonction du couple résistant calculé et de leur angle d'anti-lâcher,
- annulation du couple résiduel $C_{res}$ par application d'un couple opposé $C1$, C2 sur le baladeur,
- dé-crabotage.

L'invention a pour principal avantage de ne nécessiter aucun ajout dans les modules d'actionnement de passages de vitesses existants. Elle évite aussi de devoir redimensionner leurs moteurs d'actionnement.

Sachant qu'un changement de rapport doit prendre un temps de l'ordre de 1s, l'augmentation du temps de décrabotage entraîné par la mise en œuvre de l'invention, par exemple de 50ms à 150ms, reste dans des limites acceptables pour le confort de conduite.

La description ci-dessus, présente une seule méthode préférée d'estimation du couple résistant. Toutefois, sans sortir du cadre de l'invention, on peut adopter d'autres techniques d'observation tout aussi robustes aux bruits de mesures, selon la qualité des mesures de position de la fourchette disponibles.

En variante, on peut prévoir de réaliser un balayage de couple par la machine électrique sans estimation préalable du couple résistant. Cette variante augmente cependant largement le temps de dé-crabotage car au lieu de choisir entre deux valeurs de couple, on doit choisir entre un ensemble étendu de valeurs, si bien que le balayage prend un temps important. La méthode permet néanmoins d'assurer toujours le dé-crabotage, sans redimensionner aucun composant de l'actionneur.

Comme indiqué plus haut, la méthode proposée s'applique avantageusement sur tout groupe motopropulseur hybride comprenant une boîte de vitesses à rapports étagés, reliés sur une ligne primaire sans embrayage de coupure, à un moteur thermique et à au moins une machine électrique pouvant transmettre simultanément leurs couples aux roues d'un véhicule sur au moins un rapport hybride dont l'engagement et le désengagement est assuré par le crabotage et le dé-crabotage d'un baladeur à crabots sur un pignon. Dans un tel GMP, le dé-crabotage du baladeur peut être contrôlé en appliquant la méthode. Elle est particulièrement efficace, dans le cas où les baladeurs concernés sont dépourvus de systèmes de synchronisation intégrés, et où les crabots des baladeurs ont un angle d'anti-lâcher non nul.

**Revendications**

1. Procédé de contrôle du dé-crabotage d'un baladeur (1) de boîte de vitesses de véhicule à crabots (la), solidaire en rotation d'un arbre de cette boîte sur lequel il peut se déplacer axialement sous la commande d'un actionneur de passage motorisé entre une position neutre dé-crabotée et au moins une position d'engagement sur un rapport hybride où il est craboté sur un pignon rendu solidaire de l'arbre pour transmettre aux roues du véhicule, de manière cumulative ou non, le couple reçu d'au moins deux sources motrices distinctes, comportant les étapes suivantes :

   - application d'une demande de couple nul sur toutes les sources motrices du véhicule,
   - application d'une consigne de dé-crabotage sur le baladeur,

   et **caractérisé en ce qu'**il comporte les étapes supplémentaires suivantes:

   - en l'absence de dé-crabotage rapide, estimation du couple résistant ($C_r$) sur les crabots (1a) du baladeur,
   - calcul du couple résiduel ($C_{res}$) sur les crabots en fonction du couple résistant calculé, et de leur angle d'anti-lâcher,
   - annulation du couple résiduel ($C_{res}$) par application d'un couple opposé *(C1, C2)* sur le baladeur,
   - dé-crabotage.

2. Procédé de contrôle selon la revendication 1, **caractérisé en ce qu'**on calcule les deux valeurs opposées *(C1, C2)* de couple d'annulation du couple résiduel ($C_{res}$) résiduels, pour les appliquer successivement sur le baladeur, en cas d'échec de l'une d'elles.

3. Procédé de contrôle selon la revendication 2, **caractérisé en ce qu'**on observe le sens de déplacement d'une fourchette d'actionnement du baladeur (1) lors de l'application d'une première valeur *(C1)* de couple d'annulation.

4. Procédé de contrôle selon la revendication 3, **caractérisé en ce qu'**on applique la deuxième valeur de couple d'annulation (C2) sur le baladeur, si la fourchette s'écarte de sa position neutre après application de la première.

5. Procédé de contrôle selon l'une des revendications 3 ou 4, **caractérisé en ce que** le Couple résistant sur le baladeur ($C_r$) est estimé en fonction :

   - d'une mesure de la position ($X_f$) d'une fourchette d'actionnement du baladeur,
   - de l'effort fourni par un ressort d'assistance,
   - d'un coefficient de couple ($K_{ressort}$) du ressort d'assistance, et
   - de l'inertie de la fourchette ($I_f$).

6. Procédé de contrôle selon la revendication 5, **caractérisé en ce que** le couple résistant ($C_r$) est obtenu en soustrayant l'effort du ressort ($F_{ressort}$) d'un gain sur l'inertie de la fourchette ($I_f$) en fonction de son accélération,

7. Procédé de contrôle selon l'une des revendications précédentes, **caractérisé en ce que** les sources motrices incluent au moins un moteur thermique et une machine électrique.

8. Procédé de contrôle selon la revendication 7, **caractérisé en ce que** le couple résiduel *($C_{res}$)* est imposé au baladeur par le moteur thermique, alors que les couples d'annulation du couple résiduel (*C1, C2*) sont appliqués par une machine électrique.

9. Groupe motopropulseur hybride comprenant une boîte de vitesses à rapports étagés, reliés sur une ligne primaire sans embrayage de coupure, à un moteur thermique et à au moins une machine électrique pouvant transmettre simultanément leurs couples aux roues d'un véhicule sur au moins un rapport hybride dont l'engagement et le désengagement est assuré par le crabotage et le décrabotage d'un baladeur à crabots sur un pignon, **caractérisé en ce que** le dé-crabotage du baladeur est contrôlé conformément à l'une des revendications précédentes.

10. Groupe motopropulseur selon la revendication 9, **caractérisé en ce que** le baladeur est dépourvu de système de synchronisation intégré, et **en ce que** les crabots du baladeur ont un angle d'anti-lâcher non nul.

**Patentansprüche**

1. Verfahren zur Steuerung der Auskupplung eines Schieberads (1) eines Fahrzeuggetriebes mit Klauen (la), das drehfest mit einer Welle dieses Getriebes verbunden ist, auf der es sich unter der Steuerung eines motorisierte Schaltaktuators axial bewegen kann zwischen einer ausgekuppelten Neutralstellung und zumindest einer Eingriffsstellung in einem Hybridgang, in der es mit einem fest mit der Welle verbundenen Ritzel formschlüssig ist, um in kumulativer oder nicht-kumulativer Weise das von zumindest zwei verschiedenen Antriebsquellen empfangene Drehmoment auf die Räder des Fahrzeugs zu übertragen, umfassend die folgenden Schritte:

   - Anwenden einer Null-Drehmoment-Anforderung auf alle Antriebsquellen des Fahrzeugs,
   - Anwenden einer Auskupplungsanweisung am Schieberad, und **dadurch gekennzeichnet, dass** es die folgenden zusätzlichen Schritte umfasst:

      - in Ermangelung einer schnellen Auskupplung Schätzen des Widerstandsmoments ($C_r$) an den Klauen (1a) des Schieberads,
      - Berechnen des Restdrehmoments ($C_{res}$) an den Klauen in Abhängigkeit vom berechneten Widerstandsmoment und ihrem Lösesicherungswinkel,
      - Aufheben des Restdrehmoments ($C_{res}$) durch Aufbringen eines entgegengesetzten Drehmoment (C1, C2) auf das Schieberad,
      - Auskuppeln.

2. Steuerungsverfahren nach Anspruch 1, **dadurch gekennzeichnet, dass** die beiden entgegengesetzten Drehmomentwerte (C1, C2) zur Aufhebung des Restdrehmoments ($C_{res}$) berechnet werden, um sie nacheinander auf das Schieberad anzuwenden, falls einer von ihnen versagt.

3. Steuerungsverfahren nach Anspruch 2, **dadurch gekennzeichnet, dass** die Bewegungsrichtung einer Betätigungsgabel des Schieberads (1) bei der Anwendung eines ersten Aufhebungsdrehmomentwertes (C1) beobachtet wird.

4. Steuerungsverfahren nach Anspruch 3, **dadurch gekennzeichnet, dass** der zweite Aufhebungsdrehmomentwert (C2) auf das Schieberad aufgebracht wird, wenn die Gabel nach dem Aufbringen des ersten von ihrer Neutralstellung abweicht.

5. Steuerungsverfahren nach einem der Ansprüche 3 oder 4, **dadurch gekennzeichnet, dass** der Widerstandsmoment am Schieberad ($C_r$) geschätzt wird in Abhängigkeit von:

   - einer Messung der Position ($X_f$) einer Betätigungsgabel des Schieberads,
   - der von einer Hilfsfeder bereitgestellten Kraft,
   - einem Drehmomentkoeffizienten ($K_{ressort}$) der Hilfsfeder und
   - der Trägheit der Gabel ($I_f$).

6. Steuerungsverfahren nach Anspruch 5, **dadurch gekennzeichnet, dass** das Widerstandsmoment ($C_r$) durch Subtrahieren der Federkraft ($F_{ressort}$) von einer Zunahme der Trägheit der Gabel ($I_f$) in Abhängigkeit von ihrer Beschleunigung erhalten wird.

7. Steuerungsverfahren nach einem der vorangehenden Ansprüche, **dadurch gekennzeichnet, dass** die Antriebsquellen zumindest einen Verbrennungsmotor und eine elektrische Maschine umfassen.

8. Steuerungsverfahren nach Anspruch 7, **dadurch gekennzeichnet, dass** das Restdrehmoment ($C_{res}$) vom Verbrennungsmotor auf das Schieberad aufgebracht wird, während die Drehmomente (C1, C2) zur Aufhebung des Restdrehmoments von einer elektrischen Maschine aufgebracht werden.

9. Hybridantriebsstrang, umfassend ein Getriebe mit abgestuften Gängen, die auf einer Primärleitung ohne Trennkupplung verbunden sind, mit einem Verbrennungsmotor und mit mindestens einer elektrischen Maschine, die gleichzeitig ihre Drehmomente auf die Räder eines Fahrzeugs in zumindest einem Hybridgang übertragen können, dessen In- und Ausrücken durch Ein- bzw. Auskuppeln eines Schieberads mit Klauen an einem Ritzel erfolgt, **dadurch gekennzeichnet, dass** das Auskuppeln des Schieberad nach einem der vorangehenden Ansprüche gesteuert wird.

**10.** Antriebsstrang nach Anspruch 9, **dadurch gekennzeichnet, dass** das Schieberad kein integriertes Synchronisationssystem aufweist und dass die Klauen des Schieberads einen Lösesicherungswinkel ungleich Null aufweisen.

**Claims**

**1.** Method for controlling the declutching of a sliding gear (1) of a vehicle gearbox with dogs (1a) that is constrained to rotate with a shaft of said gearbox on which shaft it can move axially under the control of a powered shift actuator between a neutral declutched position and at least one engaged position engaged on a hybrid gear ratio where it is engaged on a pinion rigidly connected to the shaft in order to transmit to the wheels of the vehicle, cumulatively or otherwise, the torque received from at least two distinct power sources, comprising the following steps:

- application of a zero torque request to all the power sources of the vehicle,
- application of a declutching instruction to the sliding gear,

and **characterized in that** it comprises the following additional steps:

- in the absence of rapid declutching, estimating the resistance torque ($C_r$) on the dogs (1a) of the sliding gear,
- calculating the residual torque ($C_{res}$) on the dogs as a function of the calculated resistance torque and the anti-disengagement angle thereof,
- cancelling the residual torque ($C_{res}$) by application of an opposite torque *(C1, C2)* on the sliding gear,
- declutching.

**2.** Control method according to Claim 1, **characterized in that** two opposing cancellation torque values *(C1, C2)* for cancelling the residual torque values *($C_{res}$)* are calculated and applied successively to the sliding gear if one of said values fails.

**3.** Control method according to Claim 2, **characterized in that** the direction of movement of a selection fork of the sliding gear (1) is observed during application of a first cancellation torque value *(C1)*.

**4.** Control method according to Claim 3, **characterized in that** the second cancellation torque value (C2) is applied to the sliding gear if the fork moves away from the neutral position thereof following application of the first value.

**5.** Control method according to one of Claims 3 and 4, **characterized in that** the resistance torque on the sliding gear ($C_r$) is estimated as a function of:

- a measurement of the position ($X_f$) of a selection fork of the sliding gear,
- the force applied by an assistance spring,
- a torque coefficient ($K_{spring}$) of the assistance spring, and
- the inertia of the fork ($I_f$).

**6.** Control method according to Claim 5, **characterized in that** the resistance torque *($C_r$)* is obtained by subtracting the force of the spring *($F_{spring}$)* from a gain on the inertia of the fork ($I_f$) as a function of the acceleration thereof.

**7.** Control method according to one of the preceding claims, **characterized in that** the power sources include at least one combustion engine and one electric machine.

**8.** Control method according to Claim 7, **characterized in that** the residual torque *($C_{res}$)* is applied to the sliding gear by the combustion engine, while the cancellation torques *(C1, C2)* for cancelling the residual torques are applied by the electric machine.

**9.** Hybrid powertrain including a multi-step gearbox linked on a primary line with no disconnect clutch to a combustion engine and to at least one electric machine that can simultaneously transmit the torques therefrom to the wheels of a vehicle over at least one hybrid gear ratio that is engaged and disengaged respectively by the engaging and declutching of a sliding dog gear on a pinion gear, **characterized in that** the declutching of the sliding gear is controlled according to one of the preceding claims.

**10.** Powertrain according to Claim 9, **characterized in that** the sliding gear has no integrated synchronization system, and **in that** the dogs of the sliding gear have a non-zero anti-disengagement angle.

**Fig. 1**

**Fig. 2**

**Fig. 3**

**Fig. 4**

**Fig. 5**

**Fig. 6**

**Fig. 7**

## RÉFÉRENCES CITÉES DANS LA DESCRIPTION

**Documents brevets cités dans la description**

- FR 2921525 A1